# EUROPEAN PATENT APPLICATION

(11) **EP 4 641 778 A2**
(43) Date of publication of application: **29.10.2025**
(21) Application number: 25165043.8
(22) Date of filing: 20.03.2025
(51) Int. Cl.: H01M 50/107, H01M 50/559, H01M 50/567, H01M 50/593

(54) **SECONDARY BATTERY, BATTERY GROUP AND ELECTRONIC APPARATUS**

(30) Priority: 22.04.2024 CN 202420840474 U
(71) Applicant: AESC Japan Ltd., Yokohama-Shi, Kanagawa 220-0012 (JP)
(72) Inventor: CHEN, Xiu, Wuxi City, Jiangsu Province 214443 (CN)
(74) Representative: Becker, Eberhard

(57) **Abstract**

A secondary battery (100), a battery group (10), and an electronic apparatus (1) are provided. The secondary battery includes a casing (110), a terminal post (140), and an insulating member (150). The casing includes an end wall (111) provided with a terminal post hole (1111). The terminal post includes a post portion (142) that passes through the terminal post hole and a riveted portion (141) that is folded towards an outer edge of the end wall relative to the post portion. A portion where the riveted portion is connected to the post portion (142) is a transition portion (145), and the transition portion undergoes material deformation when the riveted portion (141) is folded toward the outer edge of the end wall. The insulating member is configured to isolate the terminal post from the end wall and includes a compression-bearing portion in contact with the terminal post.

## Description

### BACKGROUND

### Technical Field

The disclosure relates to the field of batteries, and in particular, relates to a secondary battery, a battery group, and an electronic apparatus.

### Description of Related Art

Regarding cylindrical batteries, at present, due to advantages such as mature production technology, high yield rate, low processing costs, and favorable safety performance and heat dissipation performance, cylindrical batteries are widely used in various industries.

In a cylindrical battery of the related art, the terminal post is fixedly connected to the end wall of the casing through riveting most of the time, and an insulating member is sandwiched between the terminal post and the end wall. During the assembly process of the terminal post, the bending region of the terminal post generates a large compressive force on the insulating member, which may cause the insulating member to be compressed and broken. A short circuit may accordingly occur between the terminal post and the end wall.

### SUMMARY

In view of the abovementioned shortcomings of the related art, the disclosure provides a secondary battery, a battery group, and an electronic apparatus capable of improving the technical problem of the terminal post generating a large compressive force on the insulating member during the riveting process.

To achieve the above and other related purposes, the disclosure provides a secondary battery including a casing, a terminal post, and an insulating member. The casing includes an end wall, and the end wall is provided with a terminal post hole. The terminal post includes a post portion that passes through the terminal post hole and a riveted portion that is folded towards the outer edge of the end wall relative to the post portion. A portion where the riveted portion is connected to the post portion is a transition portion, and the transition portion undergoes material deformation when the riveted portion is folded toward the outer edge of the end wall. The insulating member is configured to isolate the terminal post from the end wall and includes a compression-bearing portion in contact with the terminal post. The compression-bearing portion bears a compressive stress when the transition portion is bent. At least one of the transition portion and the compression-bearing portion is provided with a stress buffering structure configured to reduce a pressure generated by the transition portion on the compression-bearing portion.

In the secondary battery provided by an embodiment of the disclosure, in a height direction of the secondary battery, the riveted portion is located on an inner side of the casing.

In the secondary battery provided by an embodiment of the disclosure, the stress buffering structure includes a first stress buffering structure located in the transition portion and disposed to continuously or discontinuously surround the post portion.

In the secondary battery provided by an embodiment of the disclosure, the first stress buffering structure includes a first groove, and a wall thickness of the first groove is 0.3 mm to 1 mm.

In the secondary battery provided by an embodiment of the disclosure, the first stress buffering structure includes a slit.

In the secondary battery provided by an embodiment of the disclosure, the transition portion is a non-smooth surface.

In the secondary battery provided by an embodiment of the disclosure, the stress buffering structure includes a second stress buffering structure located on the compression-bearing portion. The compression-bearing portion includes a first portion disposed in the terminal post hole and a second portion disposed between the riveted portion and the end wall. The first portion and the second portion are integrally formed.

In the secondary battery provided by an embodiment of the disclosure, the second stress buffering structure is located at a connection between the first portion and the second portion. The second stress buffering structure includes a second groove which is disposed to continuously or discontinuously surround the first portion.

In the secondary battery provided by an embodiment of the disclosure, the second stress buffering structure is located at the second portion. The second stress buffering structure includes a third groove which is disposed to continuously or discontinuously surround the first portion.

In the secondary battery provided by an embodiment of the disclosure, the second stress buffering structure is located at the first portion. The second stress buffering structure includes a fourth groove which is disposed to continuously or discontinuously surround the first portion.

In the secondary battery provided by an embodiment of the disclosure, the stress buffering structure includes a third stress buffering structure disposed at an edge of the terminal post hole facing the riveted portion. The third stress buffering structure is a chamfer, and the chamfer is shaped as one or more of a wedge shape and an arc shape.

In the secondary battery provided by an embodiment of the disclosure, the secondary battery is a cylindrical battery.

In the secondary battery provided by an embodiment of the disclosure, the cylindrical battery includes the casing, and one end of the casing is open and the other end is closed. The terminal post hole is provided at the closed end of the casing.

In the secondary battery provided by an embodiment of the disclosure, the casing is a steel casing.

The disclosure further provides a battery group, and the battery group includes the secondary battery according to any one of the above.

The disclosure further provides an electronic apparatus, and the electronic apparatus includes the aforementioned battery group.

In the secondary battery provided by the disclosure, by arranging the stress buffering structure on at least one of the edge of the terminal post hole facing the riveted portion, the position where the riveted portion bends relative to a post portion, and the position where the insulating member is opposite to the riveted portion, the compressive force exerted on the insulating member when the terminal post is riveted is decreased. As such, the riveted portion is allowed to avoid the stress concentration position of the insulating member, so the problem of breaking of the insulating member is avoided. Further, in the disclosure, the problem of warping at the end of the insulating member away from the terminal post is also improved, and the assembly quality of the secondary battery is thus enhanced.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other embodiments can be obtained based on these drawings without inventive effort.
FIG. 1 is a structural schematic view of a secondary battery according to an embodiment of the disclosure.
FIG. 2 is a structural schematic view of a terminal assembly of the secondary battery according to an embodiment of the disclosure.
FIG. 3 is a local enlargement view of A in FIG. 1.
FIG. 4 is a local enlargement view of B in FIG. 3.
FIG. 5 is a structural schematic view of a terminal post of the secondary battery before being riveted according to example one of the disclosure.
FIG. 6 is a structural schematic view of the terminal post of the secondary battery before being riveted according to example two of the disclosure.
FIG. 7 is a structural schematic view of the terminal post of the secondary battery before being riveted according to example three of the disclosure.
FIG. 8 is a structural schematic view of the terminal post of the secondary battery before being riveted according to example four of the disclosure.
FIG. 9 is a structural schematic view of the terminal post of the secondary battery after being riveted according to an embodiment of the disclosure.
FIG. 10 is a structural schematic view of the terminal post of the secondary battery after being riveted according to another embodiment of the disclosure.
FIG. 11 is a structural schematic view of the terminal post of the secondary battery after being riveted according to still another embodiment of the disclosure.
FIG. 12 is a structural schematic view of an insulating member of the secondary battery according to an embodiment of the disclosure.
FIG. 13 is a local enlargement view of C in FIG. 12.
FIG. 14 is a structural schematic view of the insulating member of the secondary battery according to another embodiment of the disclosure.
FIG. 15 is a local enlargement view of D in FIG. 14.
FIG. 16 is a structural schematic view of the insulating member of the secondary battery according to still another embodiment of the disclosure.
FIG. 17 is a local enlargement view of E in FIG. 16.
FIG. 18 is a schematic view of a battery group according to an embodiment of the disclosure.
FIG. 19 is a schematic view of an electronic apparatus according to an embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

In the disclosure, the secondary battery includes a terminal assembly. The terminal assembly is the component in the secondary battery where electrochemical reactions occur, and one or more terminal assemblies may be included.

The secondary battery also includes a casing, a cover plate, and a terminal post. The casing includes an end wall and a side wall surrounding the end wall. One end of the side wall has an opening, and the terminal assembly may be assembled into the casing through the opening of the casing. The cover plate is used to cover the opening of the casing for sealing. The terminal post passes through the end wall and is electrically connected to the terminal assembly to conduct the electrical energy generated by the terminal assembly out of the battery.

To reduce the risk of short circuits, it is necessary to insulate and isolate the terminal post and the end wall. This is typically achieved by interposing an insulating member between the terminal post and the end wall. The insulating member is at least partially located between the terminal post and the end wall to insulate the terminal post from the end wall.

In the related art, when assembling the terminal post and the end wall, the terminal post is typically inserted into a terminal post hole on the end wall from one side of the end wall first, so that an outer end of the terminal post protrudes to the other side of the end wall. Next, the outer end of the terminal post is compressed to form a riveted portion to fix the terminal post onto the end wall.

During a folding process of the riveted portion, in the riveted portion, an inner side bears a compressive stress, while an outer side bears a tensile stress, a material on the outer side is stretched, and a material on the inner side flows under the compressive stress. Therefore, material deformation occurs at a bending point where the riveted portion contacts the insulating member, and a protrusion is formed. This protrusion precisely contacts a stress concentration area of the insulating member. Under the dual effects of a compressive force of the riveted portion and the protrusion, the insulating member may break. Insulation of the insulating member may thus fail, resulting in a short circuit between the terminal post and the end wall. Additionally, under the compressive force, the insulating member may warp at the end away from the terminal post, and assembly quality of a battery may thus be affected.

In view of the above, a technical solution is provided in the disclosure. By arranging a stress buffering structure on at least one of the edge of the terminal post hole facing the riveted portion, the position where the riveted portion bends relative to a post portion, and the position where the insulating member is opposite to the riveted portion, the compressive force exerted on the insulating member when the terminal post is riveted may be decreased. As such, the riveted portion is allowed to avoid the stress concentration position of the insulating member, so the problem of breaking of the insulating member is avoided. Further, in the disclosure, the problem of warping at the end of the insulating member away from the terminal post may also be improved, and the assembly quality of the secondary battery is thus enhanced.

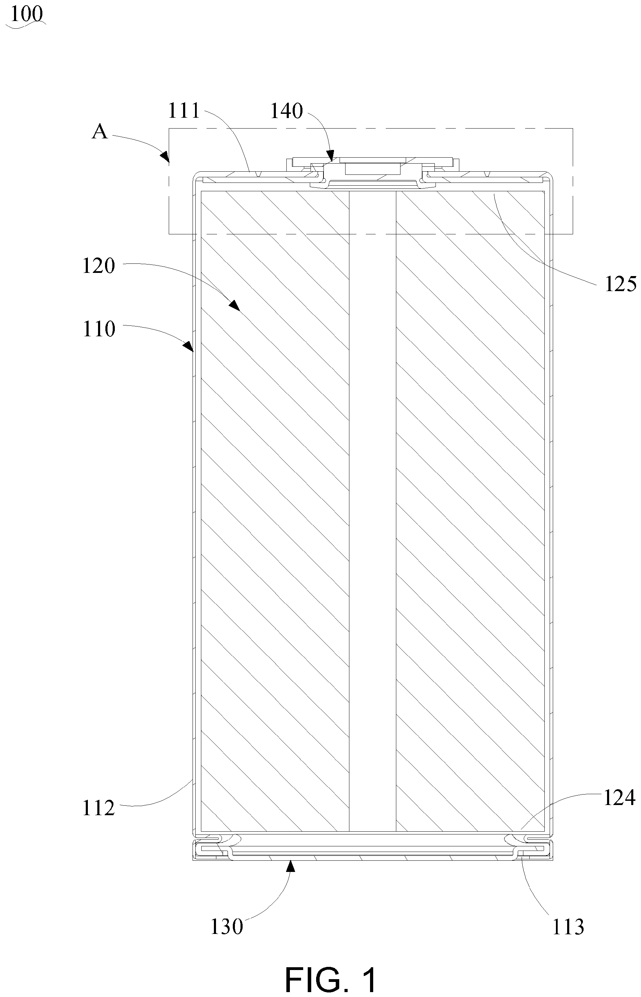

With reference to FIG.1 to FIG.19, the disclosure provides a secondary battery 100, a battery group 10, and an electronic apparatus 1. The secondary battery 100 includes a casing 110, a terminal assembly 120, a terminal post 140, and a cover plate 130.

With reference to FIG. 1, FIG. 1 is a structural schematic view of a secondary battery according to an embodiment of the disclosure. The casing 110 includes an end wall 111 and a side wall 112 surrounding the end wall 111. As long as a stable sealing and electrical connection relationship can be formed, the connection between the end wall 111 and the side wall 112 may be achieved in a variety of ways, such as integral stamping, integral casting, or separate welding. The surrounding of the side wall 112 is not limited and may be in the form of a circular cylinder shape or a prismatic cylinder shape, or the side wall 112 may also surround the end wall 111 along any other closed loop contour that can match the end wall 111. In the embodiment, an outer edge of the end wall 111 is circular, and the side wall 112 surrounds the outer edge of the end wall 111 in a cylindrical shape, and a circular opening 113 is formed at the end of the side wall 112 away from the end wall 111. The casing 110 formed by the end wall 111 and the side wall 112 forms an accommodating cavity for containing the terminal assembly 120, electrolyte, and other necessary battery components. Specifically, a diameter of the casing 110 may be determined according to a specific size of the terminal assembly 120, such as 18mm, 21mm, 46mm, etc. The casing 110 can be made of various materials, such as copper, iron, aluminum, steel, aluminum alloy, etc. In order to prevent the casing 110 from rusting during long-term use, a surface of the casing 110 may also be plated with a layer of anti-rust material such as metal nickel.

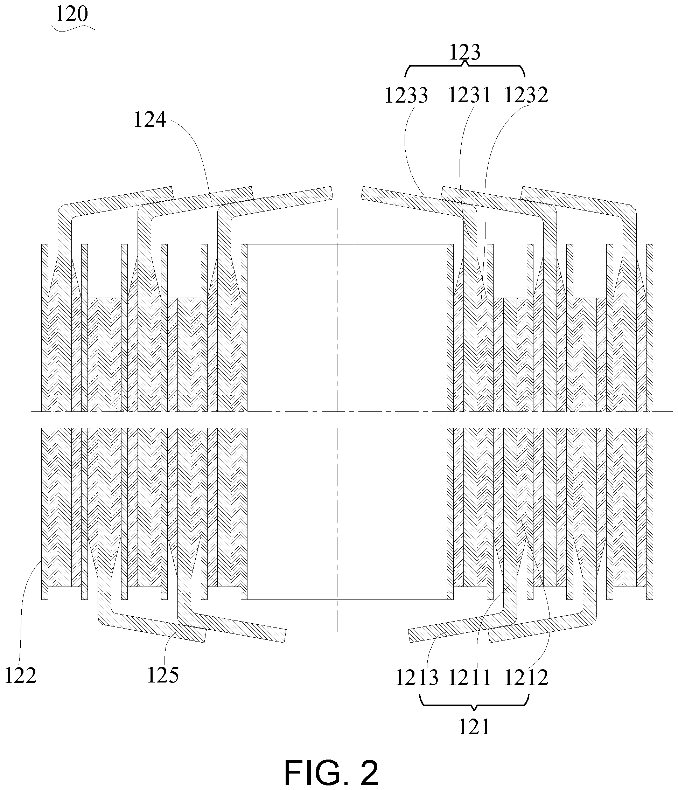

With reference to FIG. 1 and FIG. 2, FIG. 2 is a structural schematic view of a terminal assembly of the secondary battery according to an embodiment of the disclosure. The terminal assembly 120 is accommodated in the casing 110, and the terminal assembly 120 is a component in the secondary battery 100 where electrochemical reactions occur. One or a plurality of terminal assemblies 120 may be included within the casing 110. The terminal assembly 120 includes a terminal sheet and a separator 122, and the terminal sheet and the separator 122 are wound to form a wound structure. Specifically, in this embodiment, the terminal assembly 120 includes a positive terminal sheet 121, the separator 122, and a negative terminal sheet 123 wound around the casing 110 in an axial direction. The positive terminal sheet 121 includes a positive current collector 1211 and a positive active material layer coated on the positive current collector 1211. A first coated region 1212 coated with the positive active material layer and a first uncoated region 1213 without the positive active material layer are formed on the positive current collector 1211. The first coated region 1212 and the first uncoated region 1213 are arranged in the axial direction of the casing 110. The first uncoated region 1213 extends beyond the separator 122 towards one end in a height direction of the secondary battery 100 and is folded towards an axis of the casing 110 to form a stacked positive tab 125. The negative terminal sheet 123 includes a negative current collector 1231 and a negative active material layer coated on the negative current collector 1231. A second coated region 1232 coated with the negative active material layer and a second uncoated region 1233 without the negative active material layer are formed on the negative current collector 1231. The second coated region 1232 and the second uncoated region 1233 are arranged in the axial direction of the casing 110. The second uncoated region 1233 extends beyond the separator 122 towards the other end in the height direction of the secondary battery 100 and is folded towards the axis of the casing 110 to form a stacked negative tab 124. The separator 122 is arranged between the positive terminal sheet 121 and the negative terminal sheet 123 to isolate the positive active material layer from the negative active material layer. Taking a lithium-ion secondary battery 100 as an example, a material of the positive current collector 1211 may be aluminum, and the positive active material layer includes a positive active material, which may be lithium cobalt oxide, lithium iron phosphate, ternary lithium, or lithium manganese oxide, etc. A material of the negative current collector 1231 may be copper, and the negative active material layer includes a negative active material, which may be carbon or silicon, etc. A base material of the separator 122 may be polypropylene (PP) or polyethylene (PE), etc. In order to protect and insulate a cell, an insulating film may also be wrapped around the exterior of the cell, and the insulating film may be synthesized from PP, PE, PET, PVC, or other high molecular polymer materials.

With reference to FIG.1 and FIG.2, further, in the disclosure, the positive tab 125 faces the end wall 111 or the opening 113, while the negative tab 124 faces the other end of the casing 110. In this embodiment, the positive tab 125 faces the end wall 111 and is electrically connected to the terminal post 140, making the terminal post 140 positively charged. The negative tab 124 faces the opening 113 and is electrically connected to the casing 110, making the casing 110 negatively charged. However, in other embodiments, the negative tab 124 may be connected to the terminal post 140, and the positive tab 125 may be connected to the casing 110.

With reference to FIG.1, the cover plate 130 is sealingly installed at the opening 113. An outer edge shape of the cover plate 130 corresponds to a shape of the opening 113 and is connected to the side wall 112 to seal the opening 113. The installation method of the cover plate 130 includes but not limited to mechanical sealing or welding sealing. In this embodiment, the cover plate 130 is sealed and plugged at the opening 113 by means of mechanical sealing.

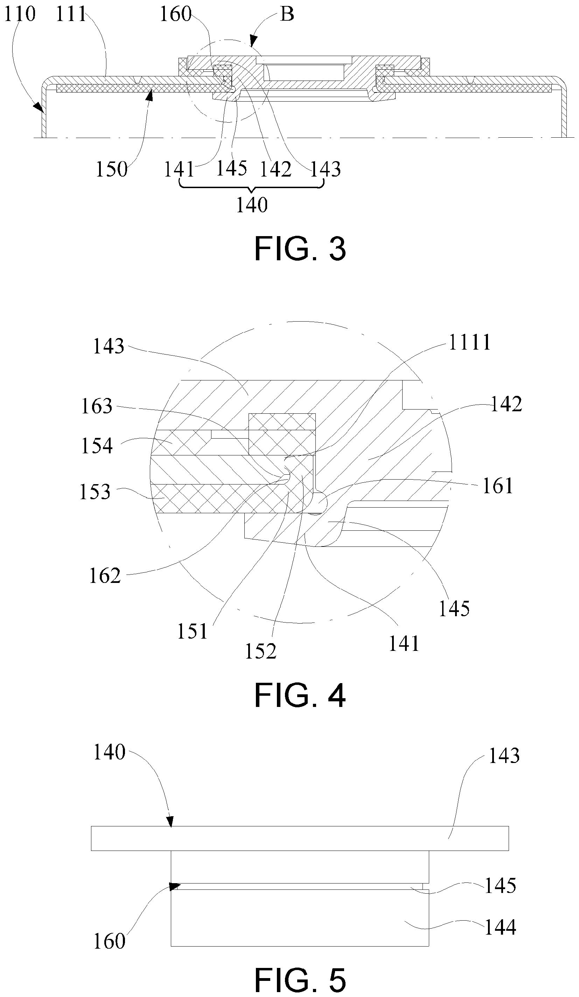

With reference to FIG.1 to FIG.4. FIG. 3 is a local enlargement view of A in FIG. 1, and FIG. 4 is a local enlargement view of B in FIG. 3. The end wall 111 is provided with a terminal post hole 1111, and the terminal post 140 passes through and is installed through the terminal post hole 1111 and is insulated from the end wall 111. One end of the terminal post 140 facing the terminal assembly 120 passes through the end wall 111 and is electrically connected to the positive tab 125 directly or indirectly. A structural form of the terminal post 140 may be any suitable form that can pass through the end wall 111 and be electrically connected to the positive tab 125 of the terminal assembly 120. For instance, a cross section of the terminal post 140 may be circular, square, prismatic, or an irregular profile that can achieve stable conduction. A shape of the terminal post hole 1111 corresponds to that of the terminal post 140. In this embodiment, the cross section of the terminal post 140 is circular.

The terminal post 140 includes a post portion 142 that passes through the terminal post hole 1111 and a riveted portion 141 that is bent towards the outer edge of the end wall 111 relative to the post portion 142. A cross section of the post portion 142 may be circular, square, prismatic, or any other irregular profile that can achieve stable conduction. Considering favorable sealing and fitting effects, preferably, the post portion 142 matches the terminal post hole 1111, that is, the shape of the terminal post hole 1111 corresponds to that of the post portion 142. In this embodiment, the cross section of the post portion 142 is circular as the circular design may facilitate processing, assembly, and sealing. A portion where the riveted portion 141 is connected to the post portion 142 is a transition portion 145. During a riveting process of the terminal post 140, when the riveted portion 141 is folded towards the outer edge of the end wall 111, an inner side of the transition portion 145 bears a compressive stress, while the outer side bears a tensile stress. It should be noted that the side of the transition portion 145 facing the outer edge of the end wall 111 is the inner side, and the opposite side of the inner side of the transition portion 145 is the outer side. The material on the outer side is stretched, while the material on the inner side flows under compressive stress, so material deformation occurs in the transition portion 145 when the riveted portion 141 is folded towards the outer edge of the end wall 111. The terminal post 140 is made of a conductive metal material, which may be copper, nickel, or aluminum, etc. In this embodiment, the material of the terminal post 140 is aluminum, which allows for easy implementation of the riveting process.

With reference to FIG. 3 and FIG. 4, the insulating member 150 is used to isolate the terminal post 140 from the end wall 111. The insulating member 150 is at least partially arranged between the riveted portion 141 and the end wall 111 and between a side wall of the terminal post hole 1111 and the post portion 142, so as to insulate and isolate the end wall 111 from the terminal post 140. The riveted portion 141 is bent in a direction away from an axis of the terminal post 140 and is connected to the post portion 142, serving as a limiting portion to restrict the terminal post 140 from separating from the end wall 111 and to press and fix the insulating member 150. Specifically, the insulating member 150 includes an integrally formed first insulator 152 and a second insulator 153. The first insulator 152 is located between the side wall of the terminal post hole 1111 and the post portion 142 and is used to isolate the side wall of the terminal post hole 1111 from the post portion 142. The second insulator 153 is pressed against the end wall 111 by the riveted portion 141. On one hand, the second insulator 153 is configured to isolate the riveted portion 141 from the end wall 111, and on the other hand, the second insulator 153 is configured to isolate the terminal assembly 120 from the end wall 111. The first insulator 152 and the second insulator 153 are arranged perpendicularly. The insulating member 150 includes a compression-bearing portion 151 that contacts the terminal post 140. The compression-bearing portion 151 is pressed by the post portion 142 and the riveted portion 141 together, so the compression-bearing portion 151 bears a compressive stress when the transition portion 145 bends.

Preferably, in other embodiments, with reference to FIG. 3 and FIG. 4, the insulating member 150 may further include a third insulator 154 arranged between a limiting portion 143 and the end wall 111. The third insulator 154 and the first insulator 152 may be integrally formed or may be arranged independently, which is not limited herein. In this embodiment, the third insulator 154 and the first insulator 152 are arranged independently. A material of the insulating member 150 may be ethylene propylene diene monomer rubber, fluorosilicone rubber, or fluorine rubber, etc., but the disclosure is not limited thereto.

Further, at least one of the transition portion 145 and the compression-bearing portion 151 may be provided with a stress buffering structure 160. The stress buffering structure 160 is used to buffer a pressure on the insulating member 150 when the terminal post 140 is riveted. That is, the stress buffering structure 160 may be arranged only on the transition portion 145 or may be arranged only on the compression-bearing portion 151. Regardless of whether the stress buffering structure 160 is arranged on either of the two positions of the transition portion 145 and the compression-bearing portion 151, it can achieve the effect of reducing the compressive force of the riveted portion 141 on the insulating member 150. Certainly, in some other embodiments, the stress buffering structure 160 may be to arranged at both positions of the transition portion 145 and the compression-bearing portion 151. The position where the stress buffering structure 160 is arranged on the transition portion 145 and the compression-bearing portion 151 is not limited, and it may be arranged at any position. The stress buffering structure 160 may be in various forms, such as a groove or a chamfer, etc. A cross-sectional shape of the groove may be arc-shaped, rectangular, triangular, or other irregular shapes. An angle and a shape of the chamfer may also have many possibilities, which are not limited herein, as long as the effect of alleviating the compressive force of the riveted portion 141 on the insulating member 150 can be achieved.

With reference to FIG. 1 and FIG. 3 to FIG. 4, in the secondary battery 100 provided by an embodiment of the disclosure, the terminal post 140 may further include the limiting portion 143. The limiting portion 143 is connected to another end of the post portion 142 away from the riveted portion 141 and protrudes from the side wall 112 of the post portion 142. The arrangement of the limiting portion 143 is configured to limit the terminal post 140 from separating from the end wall 111 on one hand, and on the other hand, the limiting portion 143 is configured to be electrically connected to the terminal assembly 120 or the outside, so as to lead out the electric energy generated by the terminal assembly 120. A cross section of the limiting portion 143 may be circular, square, prismatic, or any other irregular profile that can achieve stable conduction. In this embodiment, the cross section of the limiting portion 143 is circular as well.

With reference to FIG. 1 and FIG. 3 to FIG. 4, in the height direction of the secondary battery 100, the riveted portion 141 is located on an inner side or an outer side of the casing 110. Specifically, the riveted portion 141 and the limiting portion 143 are located on both sides of the end wall 111 to rivet and fix the terminal post 140 and the end wall 111. The riveted portion 141 may be located on one side of the end wall 111 close to the terminal assembly 120 and may be electrically connected to the terminal assembly 120. Herein, the limiting portion 143 is located on the other side of the end wall 111 and is configured to be electrically connected to an external power-consuming device to lead out the electric energy generated by the terminal assembly 120. In other embodiments, the limiting portion 143 may be located on one side of the end wall 111 close to the terminal assembly 120 and may be electrically connected to the terminal assembly 120. Herein, the riveted portion 141 is located on the other side of the end wall 111 and is configured to be electrically connected to the external power-consuming device to lead out the electric energy generated by the terminal assembly 120.

In the secondary battery 100 provided by an embodiment of the disclosure, the riveted portion 141 is located on the inner side of the casing 110, and the limiting portion 143 is located on the outer side of the casing 110. Since the riveted portion 141 is formed by later riveting, its shape is uncontrollable due to external influences, while the limiting portion 143 is processed earlier with a regular and controllable shape. Therefore, by arranging the limiting portion 143 on the outer side of the casing 110, it is not only aesthetically pleasing but also beneficial for the safety of electrical connection with external power-consuming devices.

With reference to FIG. 3 to FIG. 11, in the secondary battery 100 provided by an embodiment of the disclosure, the stress buffering structure 160 includes a first stress buffering structure 161 located at the transition portion 145. The first stress buffering structure 161 continuously or discontinuously surrounds the post portion 142 and is located on the inner side of the transition portion 145. In the discontinuously surrounding arrangement, there is no limitation on the number of discontinuities and the length of the discontinuities, which may be designed according to actual conditions. The discontinuous surrounding provided by the first stress buffering structure 161 may reduce the compressive force generated by the terminal post 140 on the insulating member 150 during riveting and may also improve riveting strength of the terminal post 140. The continuous surrounding arrangement may achieve a favorable effect of relieving the compressive force generated by the terminal post 140 on the insulating member 150. As long as a wall thickness herein is within a range of 0.3 mm to 1 mm, it can also make the riveted portion 141 of the terminal post 140 have an improved strength. In this embodiment, the first stress buffering structure 161 adopts the form of continuously surrounding the post portion 142.

With reference to FIG. 5 to FIG. 8, first stress buffering structure 161 at this position needs to be preset on an outer wall of a terminal post body 144 before the terminal post body 144 is bent. When being bent, the terminal post body 144 bends along the location of the first stress buffering structure 161. A portion of the terminal post body 144 that bends in the direction away from the axis of the terminal post 140 forms the riveted portion 141, and the unbent portion of the terminal post body 144 is the aforementioned post portion 142. The presence of this first stress buffering structure 161, on one hand, the material of the terminal post body 144 that undergoes deformation is decreased, and on the other hand, an accommodation space for the material flow generated by the riveted portion 141 on the inner side of the transition portion 145 is provided, and furthermore, the bending difficulty is lowered.

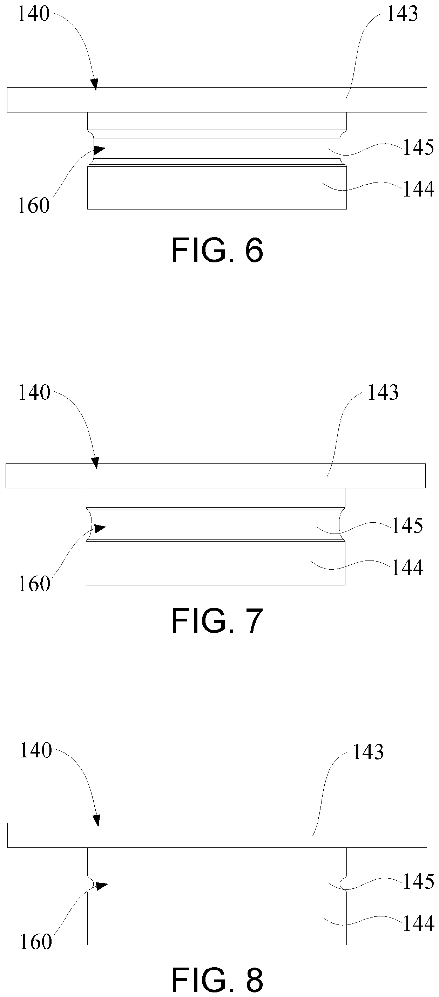

For ease of understanding, a structure of the terminal post 140 before undergoing the riveting process is described in the following paragraphs. The first stress buffering structure 161 is a groove arranged on the outer wall of the terminal post body 144. A size and a shape of the groove are not limited and may be rectangular, arc-shaped, elliptical, triangular, waist-shaped, or other irregular shapes. Herein, with reference to FIG. 5 to FIG. 8, several examples of the first stress buffering structure 161 arranged on the outer wall of the terminal post body 144 are illustrated. In example one, as shown in FIG. 5, FIG. 5 is a structural schematic view of a terminal post of the secondary battery before being riveted according to example one of the disclosure, where a cross-sectional shape of the first stress buffering structure 161 is rectangular. In example two, as shown in FIG. 6, FIG. 6 is a structural schematic view of the terminal post of the secondary battery before being riveted according to example two of the disclosure, where the cross-sectional shape of the first stress buffering structure 161 is waist-shaped. In example three, as shown in FIG. 7, FIG. 7 is a structural schematic view of the terminal post of the secondary battery before being riveted according to example three of the disclosure, where the cross-sectional shape of the first stress buffering structure 161 is elliptical. In example four, as shown in FIG. 8, which is a structural schematic view of the terminal post of the secondary battery before being riveted according to example four of the disclosure, where the cross-sectional shape of the first stress buffering structure 161 is circular.

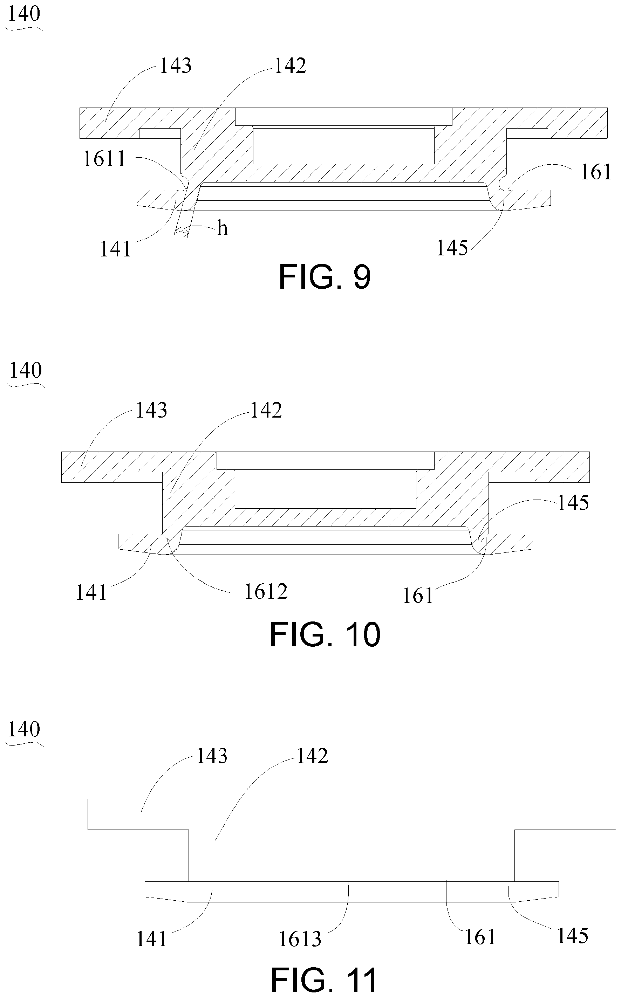

Due to the different shapes and sizes of the first stress buffering structure 161 at this position, coupled with uncontrollable factors in material deformation, the first stress buffering structure 161 may form different shapes after riveting is completed. No limitations are placed on these shapes. In the following paragraphs, with reference to FIG. 9 to FIG. 11 together, three common examples are provided.

In the secondary battery 100 provided by an embodiment of the disclosure, as shown in FIG. 9, FIG. 9 is a structural schematic view of the terminal post of the secondary battery after being riveted according to an embodiment of the disclosure. The first stress buffering structure 161 includes a first groove 1611, and a shape of the first groove 1611 is not limited. Due to the uncertainty of material deformation, the first groove 1611 is an irregular groove in most cases. Further, the first groove 1611 may discontinuously or continuously surround the post portion 142, which is not limited herein. A wall thickness at the first groove 1611 is 0.3 mm to 1 mm, and the wall thickness of the first groove 1611 is shown in h in FIG. 9. The value of h may be, for example: 0.3 mm, 0.4 mm, 0.5 mm, 0.6 mm, 0.7 mm, 0.8 mm, 0.9 mm, or 1 mm, etc. The wall thickness within this dimensional range may ensure the riveting strength of the riveted portion 141.

In the secondary battery 100 provided by another embodiment of the disclosure, as shown in FIG. 10, FIG. 10 is a structural schematic view of the terminal post of the secondary battery after being riveted according to another embodiment of the disclosure. The first stress buffering structure 161 includes a slit 1612, and the slit 1612 is located at the transition portion 145. When a size of material accumulation due to material deformation and flow is comparable to the space reserved by the preset first stress buffering structure 161, there will be no margin in the groove of the first stress buffering structure 161. After riveting is completed, the slit 1612 is formed between the post portion 142 and the riveted portion 141.

In the secondary battery 100 provided by still another embodiment of the disclosure, as shown in FIG. 11, FIG. 11 is a structural schematic view of the terminal post of the secondary battery after being riveted according to still another embodiment of the disclosure. The transition portion 145 has a non-smooth surface. According to prior knowledge, it is understood that in the transition portion 145, the inner side bears the compressive stress, while the outer side bears the tensile stress, the material on the outer side is stretched, and the material on the inner side flows under the compressive stress. Therefore, at the bending point where the riveted portion 141 contacts the insulating member 150, i.e., the inner side of the transition portion 145, material deformation occurs, and a protruding smooth transition curved surface is formed. When the size of material accumulation due to material flow and deformation is comparable to the space reserved by the preset first stress buffering structure 161, the deformed material fills the groove of the first stress buffering structure 161. The protruding smooth transition curved surface then disappears, and the riveted portion 141 and the post portion 142 may adhere together. Herein, the transition portion 145 forms a non-smooth surface, and an edge corner 1613 is formed at the connection between the riveted portion 141 and the post portion 142, rather than the irregular protruding smooth transition curved surface formed in the related art. Compared with the protruding smooth transition curved surface in the related art, the edge corner 1613 increases a distance between the transition portion 145 and the compression-bearing portion 151, i.e., the compression amount of the riveted portion 141 on the insulating member 150 is reduced. Through this arrangement, the compressive force on the insulating member 150 may be reduced when the terminal post 140 is riveted.

With reference to FIG. 3 to FIG. 4, during the riveting process of the terminal post 140, the insulating member 150 is under double compression actions from both the riveted portion 141 and the end wall 111. To alleviate the problem of the insulating member 150 breaking or warping due to deformation under the compression action, in the secondary battery 100 provided by an embodiment of the disclosure, the stress buffering structure 160 includes a second stress buffering structure 162 located on the compression-bearing portion 151. The compression-bearing portion 151 includes a first portion 1511 arranged inside the terminal post hole 1111 and a second portion 1512 arranged between the riveted portion 141 and the end wall 111, so as to achieve insulation between the terminal post 140 and the end wall 111. It should be noted that, in the axial direction of the secondary battery 100, an overlapping portion of the second insulator 153 and the riveted portion 141 is the second portion 1512, and the first portion 1511 and the second portion 1512 are integrally formed. Through this arrangement, the insulating member 150 may be easily processed and assembled, and favorable sealing performance is provided. The compression-bearing portion 151 is pressed onto the end wall 111 by both the post portion 142 and the riveted portion 141 together.

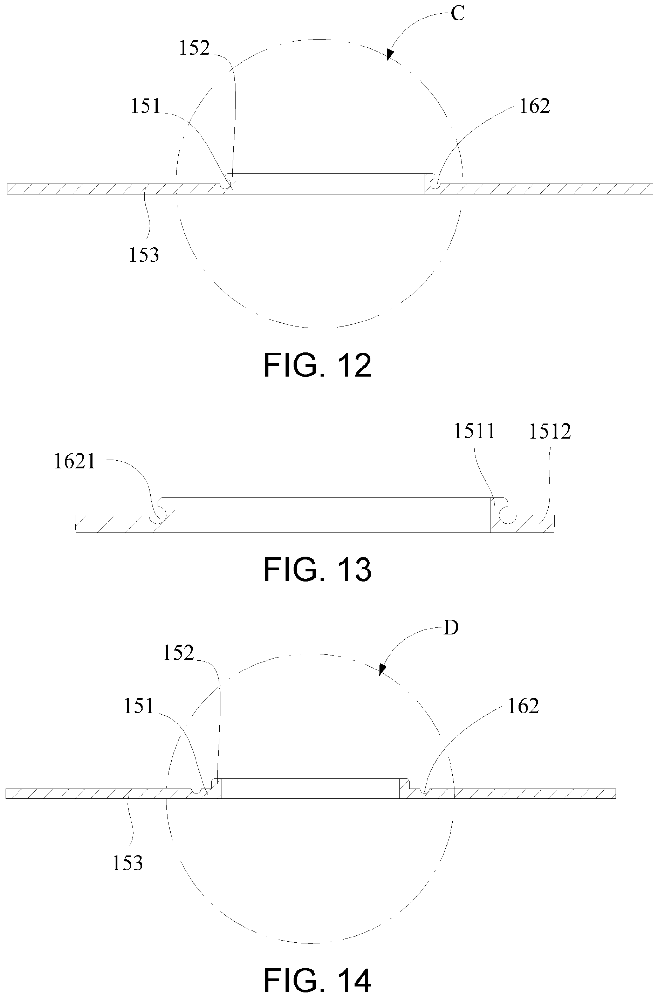

Specifically, the second stress buffering structure 162 may be located on one side of the compression-bearing portion 151 close to the terminal post 140 or may be located on one side of the compression-bearing portion 151 close to the end wall 111, which is not limited herein. In this embodiment, the second stress buffering structure 162 is located on one side of the compression-bearing portion 151 close to the end wall 111, and this arrangement of the insulating member 150 provides improved strength. On the other hand, the second stress buffering structure 162 may be arranged in the first portion 1511, may be arranged in any position of the second portion 1512, or may be arranged in a combination of the above two positions. In the following paragraphs, with reference to FIG. 12 to FIG. 17 together, three examples of the second stress buffering structure 162 on the insulating member 150 are illustrated.

With reference to FIG. 3 to FIG. 4 and FIG. 12 to FIG. 13, in the secondary battery 100 provided by an embodiment of the disclosure, the second stress buffering structure 162 is located at the connection between the first portion 1511 and the second portion 1512. That is, one portion of the second stress buffering structure 162 is located in the first portion 1511, and the other portion is located in the second portion 1512. As shown in FIG. 12 and FIG. 13, FIG. 12 is a structural schematic view of an insulating member of the secondary battery according to an embodiment of the disclosure, and FIG. 13 is a local enlargement view of C in FIG. 12. The second groove 1621 continuously or discontinuously surrounds the first portion 1511, that is, the second stress buffering structure 162 is located on one side facing the end wall 111. This arrangement makes the first insulator 152 tend to warp towards the end wall 111 side during the compression process As such, contact with the edge of the terminal post hole 1111 is decreased on one hand, and the problem of the first insulator 152 warping towards the terminal assembly 120 side under the compressive force is improved on the other hand. Further, the second stress buffering structure 162 includes a second groove 1621. A cross-sectional shape of the second groove 1621 may be selected in many ways, which are not limited thereto, for example, it may be rectangular, arc-shaped, waist-shaped, triangular, elliptical, any combination of the above shapes, or other irregular shapes. The second groove 1621 continuously or discontinuously surrounds the first portion 1511. In the discontinuously surrounding arrangement, there is no limitation on the number of discontinuities and the length of the discontinuities, which may be designed according to actual conditions. The discontinuous surrounding provided by the second groove 1621 may reduce the compressive force generated by the terminal post 140 on the insulating member 150 during riveting and may also improve the structural strength of the insulating member 150. The continuous surrounding arrangement may achieve a favorable effect of alleviating the compressive force of the terminal post 140 on the insulating member 150. In this embodiment, the second groove 1621 continuously surrounds the first portion 1511.

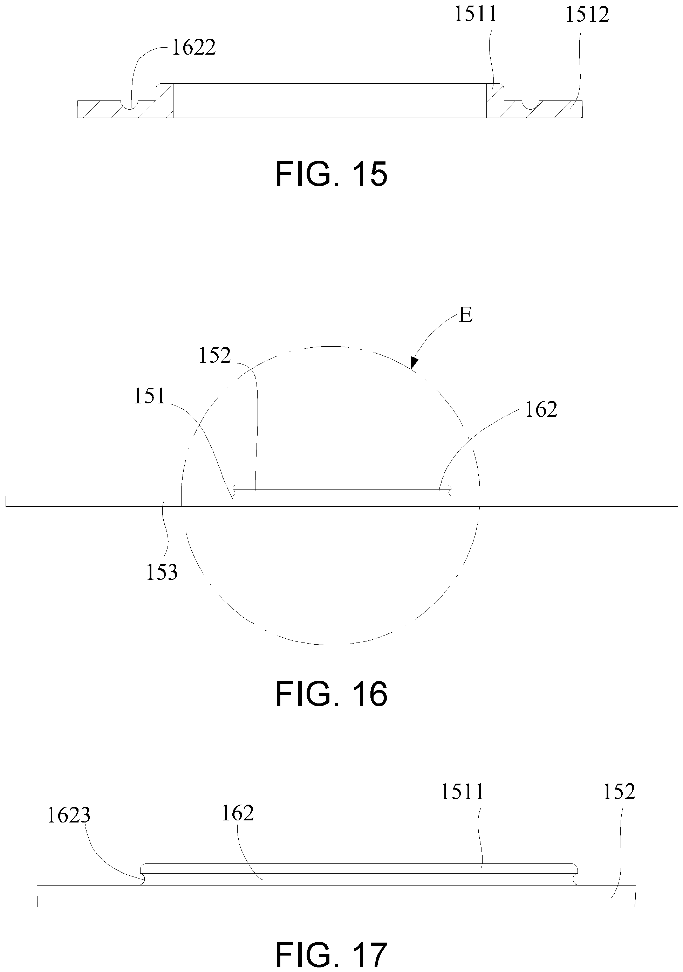

In the secondary battery 100 provided by another embodiment of the disclosure, with reference to FIG. 3 to FIG. 4 and FIG. 14 to FIG. 15, FIG. 14 is a structural schematic view of the insulating member of the secondary battery according to another embodiment of the disclosure, and FIG. 15 is a local enlargement view of D in FIG. 14. The second stress buffering structure 162 is located in the second portion 1512 on one side facing the end wall 111. The third groove 1622 continuously or discontinuously surrounds the first portion 1511, and its specific position in the second portion 1512 is not limited. The arrangement of the second stress buffering structure 162 on the side facing the end wall 111 makes the first insulator 152 tend to warp towards the end wall 111 side during the compression process. As such, the problem of the first insulator 152 warping towards the terminal assembly 120 side under the compressive force is improved. Moreover, the second stress buffering structure 162 in this technical solution has the advantage of easy demolding during the processing process. Further, the second stress buffering structure 162 includes a third groove 1622. A cross-sectional shape of the third groove 1622 may be selected in many ways, which are not limited thereto, for example, it may be rectangular, arc-shaped, waist-shaped, triangular, elliptical, any combination of the above shapes, or other irregular shapes. The third groove 1622 continuously or discontinuously surrounds the first portion 1511. In the discontinuously surrounding arrangement, there is no limitation on the number of discontinuities and the length of the discontinuities, which may be designed according to actual conditions. The discontinuous surrounding provided by the third groove 1622 may reduce the risk of breaking of the insulating member 150 and may also improve the structural strength of the insulating member 150. The continuous surrounding arrangement can achieve a favorable effect of improving the problem of the insulating member 150 warping towards the terminal assembly 120 side under the compressive force. In this embodiment, the third groove 1622 continuously surrounds the first portion 1511.

In the secondary battery 100 provided by still another embodiment of the disclosure, with reference to FIG. 16 to FIG. 17, FIG. 16 is a structural schematic view of the insulating member of the secondary battery according to still another embodiment of the disclosure., and FIG. 17 is a local enlargement view of E in FIG. 16. The second stress buffering structure 162 is located in the first portion 1511 on one side facing the terminal post hole 1111. The fourth groove 1623 continuously or discontinuously surrounds the first portion 1511, and its specific position in the first portion 1511 is not limited. The arrangement of the second stress buffering structure 162 on the side facing the end wall 111 makes the first insulator 152 tend to warp towards the end wall 111 side during the compression process. As such, the problem of the first insulator 152 warping towards the terminal assembly 120 side under the compressive force is improved. Further, the second stress buffering structure 162 includes a fourth groove 1623. A cross-sectional shape of the fourth groove 1623 may be selected in many ways, which are not limited thereto, for example, it may be rectangular, arc-shaped, waist-shaped, triangular, elliptical, any combination of the above shapes, or other irregular shapes. The fourth groove 1623 continuously or discontinuously surrounds the first portion 1511. In the discontinuously surrounding arrangement, there is no limitation on the number of discontinuities and the length of the discontinuities, which may be designed according to actual conditions. The discontinuous surrounding provided by the fourth groove 1623 may reduce the risk of breaking of the insulating member 150 and may also improve the structural strength of the insulating member 150. The continuous surrounding arrangement can achieve a favorable effect of improving the problem of the insulating member 150 warping towards the terminal assembly 120 side under the compressive force. In this embodiment, the fourth groove 1623 continuously surrounds the first portion 1511.

During the riveting process of the terminal post 140, as the insulating member 150 bears the double compression actions from both the riveted portion 141 and the end wall 111, by arranging the stress buffering structure 160 on the end wall 111, the effect of relieving the compressive force of the terminal post 140 on the insulating member 150 may also be achieved. In the secondary battery 100 provided by an embodiment of the disclosure, with reference to FIG. 4, the stress buffering structure 160 includes a third stress buffering structure 163 arranged on the edge of the terminal post hole 1111 facing the riveted portion 141. In this arrangement, contact between the edge of the end wall 111 and the stress-concentrated corner of the insulating member 150 is avoided, so the risk of breaking of the insulating member 150 is avoided. The third stress buffering structure 163 is a chamfer, and a chamfer shape is one or more of a wedge shape and an arc shape, and may be a wedge shape, an arc shape, or a combination of a wedge shape and an arc shape. The chamfer in this embodiment is wedge-shaped.

With reference to FIG. 1, in the secondary battery 100 provided by an embodiment of of the disclosure, the secondary battery 100 is a cylindrical battery.

With reference to FIG. 1 and FIG. 2, in the secondary battery 100 provided by an embodiment of the disclosure, the cylindrical battery includes the casing 110. One end of the casing 110 is open and the other end is closed, and the terminal post hole 1111 is disposed at the closed end of the casing 110.

In the secondary battery 100 provided by an embodiment of of the disclosure, the casing 110 of the secondary battery 100 may be a steel casing.

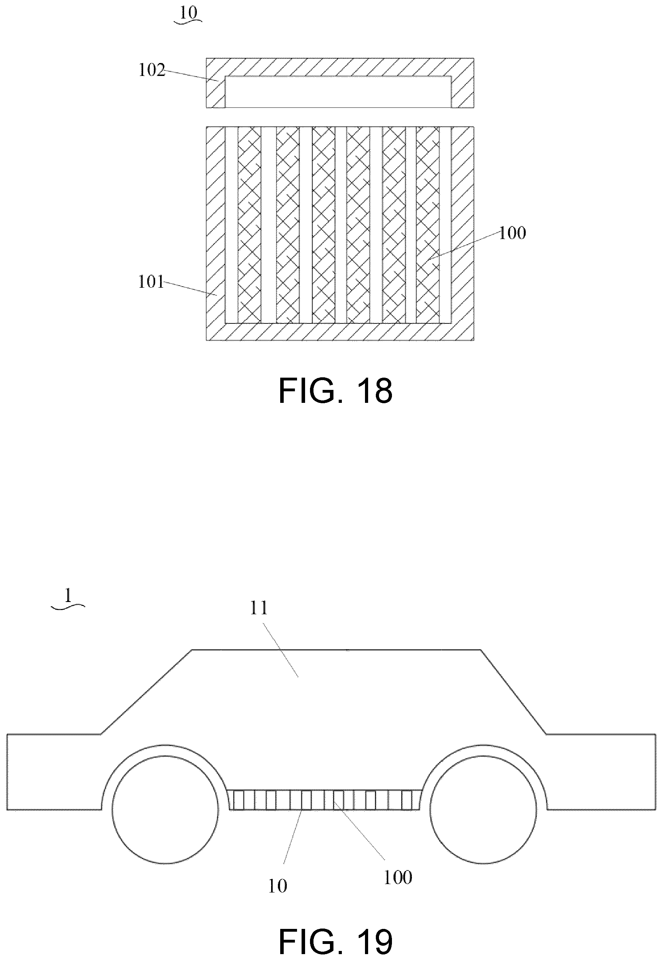

With reference to FIG. 18, FIG. 18 is a schematic view of a battery group according to an embodiment of the disclosure. The disclosure further provides a battery group 10, and the battery group 10 includes the secondary battery 100 according to any one of the above. In the battery group 10 provided by an embodiment of the disclosure, the battery group 10 includes a box body 101, a box cover 102, and a plurality of secondary batteries 100. The secondary batteries 100 are placed in the box body 101 and are connected in series or in parallel with each other or in a combination of series and parallel. The box cover 102 covers the box body 101 to protect the secondary batteries 100. It should be noted that in addition to the secondary battery 100 provided by the disclosure, the battery group 10 may also include a thermal management system of the battery group 10, a circuit board, and other parts. The battery group 10 may be a battery module, a battery pack, an energy storage cabinet, etc., and description thereof is not provided herein.

With reference to FIG. 19, FIG. 19 is a schematic view of an electronic apparatus according to an embodiment of the disclosure. The disclosure further provides an electronic apparatus 1, and the electronic apparatus 1 includes the aforementioned battery group 10. A working portion 11 is electrically connected to the battery group 10 to obtain power support. As an embodiment, the electronic apparatus 1 is a vehicle. The vehicle may be a fuel vehicle, a gas vehicle, or a new energy vehicle, and the new energy vehicle may be a pure electric vehicle, a hybrid vehicle, or a range-extended vehicle, etc., which is not limited herein. The working portion 11 is a vehicle body, and the battery group 10 is arranged at the bottom of the vehicle body and provides electrical energy support for the driving of the vehicle or the operation of electrical components in the vehicle. However, in other embodiments, the electronic apparatus 1 may be a mobile phone, a portable device, a notebook computer, a ship, a spacecraft, an electric toy, an electric tool, etc. The spacecraft includes but not limited to an airplane, a rocket, a space shuttle, a spaceship, etc. The working portion 11 may be a unit component that can obtain the electric energy of the battery group 10 and perform corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus 1 is not particularly limited in the embodiments of the disclosure.

In the secondary battery provided by the disclosure, by arranging the stress buffering structure on at least one of the edge of the terminal post hole facing the riveted portion, the position where the riveted portion bends relative to a post portion, and the position where the insulating member is opposite to the riveted portion, the compressive force exerted on the insulating member when the terminal post is riveted may be decreased. As such, the riveted portion is allowed to avoid the stress concentration position of the insulating member, so the problem of breaking of the insulating member is avoided. Further, in the disclosure, the problem of warping at the end of the insulating member away from the terminal post may also be improved, and the assembly quality of the secondary battery is thus enhanced. Therefore, some practical problems in the related art are effectively overcome, so that the disclosure exhibits high utilization value and use significance. The above-mentioned embodiments only illustrate the principles and effects of the disclosure, but are not intended to limit the disclosure. A person having ordinary skill in the art can modify or change the abovementioned embodiments without departing from the spirit and scope of the disclosure. Therefore, all equivalent modifications or changes made by a person having ordinary skill in the art without departing from the spirit and technical ideas disclosed in the disclosure shall still be covered by the claims of the disclosure.

## Claims

1. A secondary battery (100), comprising:
a casing (110) comprising an end wall (111), wherein the end wall (111) is provided with a terminal post hole (1111),
a terminal post (140) comprising a post portion (142) passing through the terminal post hole (1111) and a riveted portion (141) connected to one end of the post portion (142) and folded toward an outer edge of the end wall (111), wherein a portion where the riveted portion (141) is connected to the post portion (142) is a transition portion (145), and the transition portion (145) undergoes material deformation when the riveted portion (141) is folded toward the outer edge of the end wall (111); and
an insulating member (150) configured to isolate the terminal post (140) from the end wall (111) and comprising a compression-bearing portion (151) in contact with the terminal post (140), wherein the compression-bearing portion (151) bears a compressive stress when the transition portion (145) is bent,
wherein at least one of the transition portion (145) and the compression-bearing portion (151) is provided with a stress buffering structure (160) configured to reduce a pressure generated by the transition portion (145) on the compression-bearing portion (151).

2. The secondary battery (100) according to claim 1, wherein in a height direction of the secondary battery (100), the riveted portion (141) is located on an inner side of the casing (110).

3. The secondary battery (100) according to claim 1, wherein the stress buffering structure (160) comprises a first stress buffering structure (161) located in the transition portion (145) and disposed to continuously or discontinuously surround the post portion (142).

4. The secondary battery (100) according to claim 3, wherein the first stress buffering structure (161) comprises a first groove (1611), and a wall thickness of the first groove (1611) is 0.3 mm to 1 mm.

5. The secondary battery (100) according to claim 3, wherein the first stress buffering structure (161) comprises a slit (1612).

6. The secondary battery (100) according to claim 3, wherein the transition portion (145) is a non-smooth surface.

7. The secondary battery (100) according to any one of claims 1 to 6, wherein the stress buffering structure (160) comprises a second stress buffering structure (162) located on the compression-bearing portion (151), the compression-bearing portion (151) comprises a first portion (1511) disposed in the terminal post hole (1111) and a second portion (1512) disposed between the riveted portion (141) and the end wall (111), and the first portion (1511) and the second portion (1512) are integrally formed.

8. The secondary battery (100) according to claim 7, wherein the second stress buffering structure (162) is located at a connection between the first portion (1511) and the second portion (1512), the second stress buffering structure (162) comprises a second groove (1621) which is disposed to continuously or discontinuously surround the first portion (1511).

9. The secondary battery (100) according to claim 7, wherein the second stress buffering structure (162) is located at the second portion (1512), and the second stress buffering structure (162) comprises a third groove (1622) which is disposed to continuously or discontinuously surround the first portion (1511).

10. The secondary battery (100) according to claim 7, wherein the second stress buffering structure (162) is located at the first portion (1511), and the second stress buffering structure (162) comprises a fourth groove (1623) which is disposed to continuously or discontinuously surround the first portion (1511).

11. The secondary battery (100) according to claim 7, wherein the stress buffering structure (160) comprises a third stress buffering structure (163) disposed at an edge of the terminal post hole (1111) facing the riveted portion (141), the third stress buffering structure (163) is a chamfer, and the chamfer is shaped as one or more of a wedge shape and an arc shape.

12. The secondary battery (100) according to claim 1, wherein the secondary battery (100) is a cylindrical battery.

13. The secondary battery (100) according to claim 12, wherein the cylindrical battery comprises the casing (110), one end of the casing (110) is open and the other end is closed, and the terminal post hole (1111) is provided at the closed end of the casing (110).

14. The secondary battery (100) according to claim 13, wherein the casing (110) is a steel casing.

15. A battery group (10), comprising the secondary battery (100) according to any one of claims 1 to 14.

16. An electronic apparatus (1), comprising the battery group (10) according to claim 15.
